# EUROPEAN PATENT SPECIFICATION

(11) **EP 4 534 982 B1**
(45) Date of publication and mention of the grant of the patent: **11.03.2026**
(21) Application number: 23201331.8
(22) Date of filing: 02.10.2023
(51) Int. Cl.: G01N 21/71, G01J 3/443

(54) **IMPROVED METHOD FOR ENABLING ACCURATE MEASUREMENTS OF HIGH VAPOR PRESSURE ELEMENTS IN MOLTEN METAL USING LASER-INDUCED BREAKDOWN SPECTROSCOPY**
VERBESSERTES VERFAHREN ZUR ERMÖGLICHUNG GENAUER MESSUNGEN VON ELEMENTEN MIT HOHEM DAMPFDRUCK IN GESCHMOLZENEM METALL MITTELS LASERINDUZIERTER BREAKDOWN-SPEKTROSKOPIE
PROCÉDÉ AMÉLIORÉ PERMETTANT DES MESURES PRÉCISES D'ÉLÉMENTS À HAUTE PRESSION DE VAPEUR DANS UN MÉTAL FONDU À L'AIDE D'UNE SPECTROSCOPIE PAR CLAQUAGE INDUIT PAR LASER

(43) Date of publication of application: 09.04.2025
(73) Proprietor: DTE ehf., 113 Reykjavík (IS)
(72) Inventor: LEOSSON, Kristjan, 107 Reykjavik (IS); THORARINSDOTTIR, Kristbjorg Anna, 102 Reykjavik (IS)
(74) Representative: Arnason Faktor

(56) References cited:
- EP-A1- 4 009 037
- US-B2- 6 909 505
- MYAKALWAR ASHWIN KUMAR ET AL: "LIBS as a Spectral Sensor for Monitoring Metallic Molten Phase in Metallurgical Applications-A Review", MINERALS, vol. 11, no. 10, 30 September 2021 (2021-09-30), pages 1073, XP093009249, DOI: 10.3390/min11101073

## Description

### FIELD OF INVENTION

The invention is within the field of spectroscopy, or more specifically relates to a Laser-Induced Breakdown Spectroscopy (LIBS) method for enabling precise and (near) temperature-independent quantitative elemental analysis of volatile elements in liquid metals and alloys.

### TECHNICAL BACKGROUND

Laser-induced breakdown spectroscopy (LIBS) is an established technique for chemically analysing solid, liquid, and gaseous samples. With proper sample preparation and suitable analysis of the plasma radiation, the method can be used for quantitative elemental analysis. The LIBS method has been applied to chemically analyse a wide variety of materials, mainly in the solid form.

The potential to chemically analyse liquid metals using laser-induced plasma was identified as early as 1966 [Runge, Bonfiglio, Bryan, Spectrochimica Acta 22, 1678-1680 (1966)]. With improvements in optical technologies, efforts to realise LIBS systems for analysis of molten metals, including zinc, aluminium, and steel, have intensified significantly during the last 25 years, due to the industrial significance of such measurements.

Previously proposed LIBS systems for molten metal analysis have typically involved either immersive probes or non-contact measurements where the measurement apparatus can be situated close to or far from the surface to be analysed. Applicant's earlier application EP4009037 A1 discloses a non-immersive LIBS apparatus for high-precision elemental analysis of primarily non-volatile elements in liquid metal or alloys. The apparatus includes an open-bottom measurement chamber through which is arranged a laminar flow of preferably inert gas. It is known in LIBS measurements to control the atmosphere close to the measurement point. This is typically achieved by introducing an inert gas around the measurement point, most commonly to provide an environment that ensures a strong and stable LIBS signal. Inert or substantially inert gases having different physical properties, such as atomic/molecular weight, thermal conductivity, have been used to affect the plasma expansion. Furthermore, helium gas has been used to facilitate energy transfer between individual atomic species in the plasma through collision processes. In some cases, mixtures of gases have been used to achieve the most suitable parameters for enhancing the LIBS signal and improving precision. CN110132943A, for example, discloses a method using a gas mixture of Ar, Ne, He as the environmental gas around the measurement point, wherein the composition of the mixture is optimized to slightly improve repeatability of LIBS spectra on solid alloy samples.

In the prior art, gas flow or gas pressure in LIBS measurements is also used for secondary purposes. US 6,909,505 B2 discloses a LIBS probe where gas flow is used to create bubbles inside the molten metal, with laser excitation performed on the inner surface of the bubbles. US 6,762,835 B2 discloses a LIBS probe for liquid metal where inert gas flow (nitrogen, argon, helium, or a mixture of the three), and therefore the gas pressure inside the probe, is modulated to position the surface of the metal inside the probe at a specific distance from the excitation and collection optics. In the prior art describing LIBS analysis of the liquid metal for quantification of minor elements present in the metal, the purpose of introducing a flow or controlling the pressure of a gas or a gas mixture around the sampling point has therefore been to achieve one or more of the following effects: 1) to increase overall signal intensity; 2) to increase reproducibility of the plasma emission by using chemically inert gases with suitable physical parameters; and 3) to exert positive or negative pressure on the liquid metal surface to control metal level or create bubbles.

As a non-inert gas, oxygen is known to play a role in the development of plasma emission, through the so-called oxygen quenching effect that shortens the lifetime of plasma emission. For an aluminium target, the presence of oxygen in the surrounding gas also gives rise to significant molecular emission from AIO (K.C. Hartig, B.E. Brumfield, M.C. Phillips, S.S. Harilal, Spectrochimica Acta Part B: Atomic Spectroscopy 135, 2017, 54-62). The presence of oxygen, therefore, causes a reduction in the time-integrated LIBS signal and potential spectral interference from molecular emission, both of which are detrimental to quantitative chemical analysis. Furthermore, in the case of liquid metal analysis by LIBS, the presence of oxygen gas in the environment around the measurement point results in a rapid oxidation of the ablated metal with the resulting oxides accumulating around the measurement point, further adding to measurement instability.

In LIBS analysis of liquid metals, it has been recognized that the quantification of trace or alloying elements having a high vapor pressure is problematic, i.e., where the partial pressure of an element in the melt causes a significant amount of the element to be present in the vapor phase above the liquid metal surface. For such volatile elements, investigations have shown that the measured LIBS signal contains contributions from the liquid metal or alloy vaporized by the laser pulse, as well as from the vapor phase present above the melt surface. In such cases, the vapor-phase contribution to the LIBS signal is exponentially dependent on the melt surface temperature and proportional to the activity of the element in the melt. This was recognized, for example, in CN107328760A, which discloses an empirical melt-temperature correction formula to account for temperature dependence of LIBS data for trace elements in liquid steel. Application of the formula, however, requires accurate knowledge of the melt surface temperature which is not always straightforward to obtain. Moreover, employing multiple laser pulses, as is common in LIBS analysis, introduces additional evaporation around the sampling point that is not accounted for by such a correction formula. Finally, the proposed formula does not consider the interaction effects of other elements in the melt, which may be significant even for very low concentrations of the interacting species. Such effects must therefore be separately corrected, requiring a priori knowledge of the chemical composition of the melt. In certain applications, such as in the recycling of metals, it is impractical to have to consider the presence of multiple potential impurities and alloying elements to correctly interpret the LIBS signal arising from a particular volatile species.

In addition to the above, further complications arise because of potential absorption of plasma emission by a surrounding and typically colder vapor of the emitting species. It is well established in the art that this limits the applicability of certain emission lines to quantification [Rezaei et al., Spectrochimica Acta B 169, 105878 (2020)], particularly lines related to atomic transitions where the absorbing gas has a high lower-level occupation and high transition probability. Although such self-absorption may occur purely by the gas or plasma formed by the ablating action of the laser pulse in the absence of any significant vapor pressure, the problem is compounded by the presence of vapor above the melt surface.

Embodiments of the present invention seek to overcome/ameliorate these or other disadvantages and/or to provide an improved LIBS measurement method enabling quantitative analysis of volatile elements in molten metal such as, but not limited to magnesium, in liquid aluminium alloys.

### SUMMARY

The present invention is specified in the claims as well as in the below description.

In broad terms, the invention provides an improved method that employs Laser-Induced Breakdown Spectroscopy (LIBS) technology by which reproducible, precise, and substantially or near temperature-independent quantitative concentration measurements are carried out on liquid metal or alloy sample that may comprise one or more high vapor pressure elements. Herein, elements in molten metal or alloy that exhibit substantially higher vapor pressure than the host metal of the melt are referred to as volatile or high vapor pressure elements, such as but not limited to magnesium, zinc, or sodium in aluminium melt. Therefore, the present Invention is particularly useful for process control and/or quality control within the metallurgy industry such as but not limited to primary and secondary aluminium plants, aluminium recycling facilities, aluminium casting facilities, and essentially any other industry where accurate quantitative elemental analysis of high vapor pressure elements present in liquid metal or alloy is desired. Furthermore, the method is especially useful under conditions where the temperature of the metal being measured cannot be precisely controlled and/or measured. The present invention substantially reduces or eliminates the effect of vapor pressure of one or more volatile elements on the LIBS signal by introducing a carefully controlled fraction of one or more selectively reactive gas species into a continuous flow of an otherwise inert carrier gas such as, but not limited to, argon, neon, helium or mixtures thereof. The continuous flow of the combined gas mixture, herein referred to as a selectively reactive gas mixture, is then directed to the surface of the molten metal or alloy sample, in particular, around the measurement point, such that the environment around said measurement point will comprise a mixture of at least substantially inert background gas and one or more selectively reactive components. By providing a continuous supply of a selectively reactive gas mixture that comprises one or more reactive components that interact specifically with one or more volatile components, the effects of vapor pressure of one or more volatile species may be reduced or eliminated, such as, but not limited to, carbon dioxide interacting with evaporated magnesium. Such gas flow is conveniently implemented in an open-bottom chamber, such as that disclosed in EP4009037 A1, where continuous and unobstructed flow over the measurement point is ensured. The purpose of the selectively reactive gas mixture is to balance the evaporation of selected volatile species that, in an open chamber, occurs continuously from the exposed surface of the molten metal. Herein, the terms measurement point and sampling point may be used interchangeably.

The application of the selectively reactive gas mixture described above is fundamentally different from the application of gases or gas mixtures in LIBS measurements in the prior art. The application of a continuous flow of the selectively reactive gas mixture, containing a welldefined proportion of a specific selectively reactive gas component in the carrier gas, directed to the sample surface at the sampling point, results in a significant reduction in the strongly temperature-dependent vapor-related effects on the LIBS signals of the reacting volatile species in the molten metal, as compared to an environment of substantially inert gas, while maintaining a high and stable signal level from the same species, and other elements, ablated from the liquid metal. The effect is, therefore, different from the oxygen quenching effect that substantially affects the overall plasma emission from the liquid metal in a non-selective manner. By substantially eliminating the temperature dependence of the LIBS signal of high vapor pressure elements, the associated uncertainty in their quantification is strongly reduced. Furthermore, the use of the selectively reactive gas mixture ensures repeatable measurements for multiple laser pulses in a rapid pulse sequence impinging on the liquid metal surface. Even further, it substantially eliminates the effect of other elements in the melt on the recorded signal of the volatile species. Even further, it substantially reduces the additional self-absorption of light from the emitting species that occurs in the vapor phase of the same species, formed by evaporation from the melt surface.

Depending on conditions such as vapor pressure and electronic structure of the volatile species and the melt temperature, the application of the selectively reactive gas mixture may cause an increase or a decrease in the observed LIBS signal. In both cases, however, it ensures consistent and precise measurements of the volatile element when using a series of repeatedly impinging laser pulses and allows quantification under circumstances where the temperature and presence of other elements in the molten metal is not precisely known.

The present invention may be used in conjunction with any LIBS measurement apparatus that comprises suitable means for quantitative elemental analysis of molten metal or alloy sample, regardless of whether the sample comprises volatile or non-volatile elements or mixtures thereof, and which comprises or can be joined to a suitable measurement chamber that allows introducing a continuous flow of a selectively reactive gas mixture at and around the sampling point of a liquid metal sample. The method is not limited to any sample holding means as it can be operated with various sample containers, such as sample crucible or the like, as well as in situations where a suitable measurement chamber can be arranged by the surface of a liquid metal in an open section of a furnace, a launder/trough, or the like.

According to the primary aspect of the present invention, a method is provided for quantitative analysis of one or more elements in a molten metal or alloy by LIBS, wherein negative effects of the vapor phase of volatile trace or alloying elements in the molten metal or alloy on the analysis of said volatile elements are substantially eliminated, said method comprising: arranging a measurement chamber facing the surface of said molten metal or alloy, wherein said measurement chamber comprises one or more openings or one or more windows to provide a path for a focused laser beam from a LIBS excitation laser to enter said chamber and reach a sampling point on said surface and for providing a path for emitted light from generated plasma to exit said chamber and be collected and transmitted to a detector, transmitting a continuous flow of a selectively reactive gas mixture to the sampling point within said measurement chamber, wherein said selectively reactive gas mixture comprises one or more substantially inert carrier gas components and one or more selectively reactive gas components, wherein said one or more selectively reactive gas component of the selectively reactive gas mixture has the property of preferentially reacting with one or more volatile elements present in the molten metal or alloy, carrying out LIBS measurement on said sample surface by emitting one or more laser pulses on said sampling point with sufficient optical energy to ablate a fraction of the sample and generate a plasma above the sampling point, receiving emitted light from the generated plasma and transmitting to a detector for recording spectral data for the detected light, and analysing the spectral data to obtain quantitative determination of said one or more elements in said molten metal or alloy.

In a preferred embodiment, the transmittance of a flow (or feeding) of said selectively reactive gas mixture to (or towards) the sampling point is carried out continuously. In one embodiment, the transmittance of said flow of said selectively reactive gas mixture may be carried out prior to and during the LIBS measurement on said sample surface.

In one embodiment, the selectively reactive gas mixture is mixed prior to being transmitted into said measurement chamber and transmitted to said measurement chamber through one or more gas channels. In one such embodiment, the selectively reactive gas mixture may be provided by a pre-mixed gas source connected to one or more gas channels that are further connected to said measurement chamber. In another embodiment, the selectively reactive gas mixture may be prepared inside a first gas channel carrying and controllably connected to a gas source of substantially inert gas or gas mixture comprising one or more substantially inert gas components. The said first gas channel being connected to one or more second gas channels, wherein said second gas channels are used to controllably transmit one or more selectively reactive gas components into said first gas channel and allowing said substantially inert gas or gas mixture and said one or more selectively reactive gas components to mix and form said selectively reactive gas mixture, e.g., by using a gas mixer and/or means of flow control, and then transmitting said selectively reactive gas mixture into said measurement chamber through one or more gas channels.

In one embodiment, the selectively reactive gas mixture is prepared inside said measurement chamber, wherein said one or more selectively reactive gas components are transmitted to said measurement chamber through one or more first gas channel and said one or more carrier gas components are transmitted to said measurement chamber through one or more second gas channel. In one such embodiment, a substantially inert carrier gas or gas mixture may be controllably transmitted through a first gas channel directly into said measurement chamber and the one or more selectively reactive gas component may be transmitted controllably through one or more second gas channels directly into said measurement chamber, wherein the mixing of said carrier gas and said selectively reactive gas component to form the selectively reactive gas mixture is carried out inside said measurement chamber.

In some embodiments wherein said selectively reactive gas mixture is mixed prior to being transmitted into said measurement chamber or mixed inside said measurement chamber, the method comprises the step of controlling the flow of said one or more carrier gas components and said one or more selectively reactive gas components for providing a suitable proportion of said components prior to mixing said selectively reactive gas mixture.

In one embodiment, controlling the flow of one or more carrier gas components may comprise using a combination of at least one flow control valve and at least one flow meter.

In one embodiment, controlling the flow of one or more selectively reactive gas components may comprise using a combination of at least one flow control valve and at least one flow meter.

In an embodiment, wherein means of flow control is provided for both one or more carrier gas components and for the one or more selectively reactive gas components, the means of flow control may comprise a linkage such as, but not limited to, a direct connection between the two means of flow controls to regulate flow or a connection means from the individual means of flow controls to an external control unit that regulates the flow of the selectively reactive gas component such that flow of the selectively reactive gas component is proportional to the gas flow of carrier gas. This is in particular useful if mixing of one or more carrier gas components and the one or more selectively reactive gas component to form a selectively reactive gas mixture occurs inside said measurement chamber, i.e., after the selectively reactive gas component and carrier gas are transmitted into said measurement chamber, or for pre-mixing inside an additional chamber or vessel prior to being transmitted into the measurement chamber. In one embodiment, a gas mixer may be used to mix the one or more selectively reactive components and the one or more carrier gas components to form said selectively reactive gas mixture.

In one embodiment, the total flow rate of the selectively reactive gas mixture is controlled. In one such embodiment, the total flow rate of the selectively reactive gas mixture is in the range 0.5-5 L/min. In another embodiment, the total flow rate of the selectively reactive gas mixture may be in the range 1-5 L/min. In yet another embodiment, the total flow rate of the selectively reactive gas mixture may be in the range 1-2 L/min.

In one embodiment, the one or more substantially inert carrier gas components may be selected from the group of noble gases. In one embodiment, the one or more substantially inert carrier gas components comprise helium, neon, argon or mixtures thereof. In one embodiment, the one or more carrier gas components comprises argon. The selection of substantially inert carrier gas component(s) is typically based on obtaining suitable properties of the gaseous species or mixture thereof such as, but not limited to, reactivity, atomic/molecular weight, energy level structure, diffusivity, thermal conductivity.

In one embodiment, the one or more selectively reactive gas components is chosen based on chemical properties that allow said one or more selectively reactive gas components to selectively react with one or more volatile elements in the molten metal or alloy. For reasons discussed above, gas mixtures comprising a substantial fraction of oxygen such as, but not limited to, air or air-like gas mixture, or any mixtures with a consequential fraction of oxygen (e.g. more than 5% or more than 2% or more than 1%) are excluded from being selected as the one or more selectively reactive gas components or as the selectively reactive gas mixture. In one embodiment, the one or more selectively reactive gas component is carbon dioxide.

In one embodiment, the fraction of the one or more selectively reactive gas components in the selectively reactive gas mixture is in the range from 1% to 20%, more preferably in the range 2% to 10%, even more preferably in the range 4% to 8%, such as in the range from 1%, or from 2% or from 3% or from 4%, to 20% or to 10% or to 8% or to 6%, relative to the total volume of the selectively reactive gas mixture.

In one embodiment, the fraction of the one or more selectively reactive gas components in the selectively reactive gas mixture is in the range from 1% to 20%, more preferably in the range 2% to 10%, even more preferably in the range 4% to 8%, such as in the range from 1%, or from 2% or from 3% or from 4%, to 20% or to 10% or to 8% or to 6%, relative to the total number of moles in the selectively reactive gas mixture.

In one embodiment, the feeding/transmitting of the selectively reactive gas mixture or its individual components into the measurement chamber can be carried out with a controlled and time-dependent flow rate to obtain the balance between gas flow and evaporation of a volatile component of the liquid metal inside said measurement chamber and to maintain that balance for at least the duration of the LIBS measurement.

The measurement chamber needs to provide stable conditions by allowing for controllable flow of the selectively reactive gas component at and in the immediate vicinity to the sampling point such that the one or more selectively reactive components of said selectively reactive gas mixture selectively react with at least one evaporating component of the molten metal.

Accordingly, in one embodiment, the measurement chamber allows for continuous flow of said selectively reactive gas mixture at and in the immediate vicinity to the sampling point and generated plasma. In one such embodiment, the measurement chamber may be formed by configuring a LIBS instrument head above the surface of said molten metal or alloy, i.e., a non-immersive instrument head. In an alternative embodiment, a measurement chamber may be formed by immersing a LIBS instrument head, or parts thereof, in molten metal or alloy, i.e., an immersive instrument head. In these embodiments, the measurement chamber is arranged in a proper position and orientation to a surface of liquid metal such that LIBS measurement can readily be carried out on a sampling point of said surface. The measurement chamber may be of any suitable size and shape used to accommodate measurement of part of the liquid metal surface to be detected, i.e., for containing a plasma plume (wherein a portion of the sample is ablated and excited to form plasma during measurement) providing confinement and stable environmental conditions for the sampled spot and the plasma plume.

In one embodiment, wherein said measurement chamber is formed by a non-immersive instrument head, the measurement chamber may be an open-bottom chamber of suitable shape to accommodate measurement of the ablated portion of the sample, typically in the form of a plasma plume, and allowing a continuous flow of gas through the chamber while still retaining confinement and stable environmental conditions surrounding the sample point. In such an embodiment, a space is formed between the distal end of the instrument head and the surface of the molten metal or alloy, allowing continuous flow of the selective reactive gas mixture at and around the sampling point and further through said space and out of the measurement chamber.

In one embodiment, said measurement chamber is formed by an immersive instrument head such that at least the distal end of the instrument head is below the surface of said molten metal or alloy, the measurement chamber comprises one or more openings such that said openings are positioned above the surface of the molten metal or alloy to allow for a continuous flow of said selectively reactive gas mixture at and in the immediate vicinity to the sampling point and generated plasma. In such an embodiment, the measurement chamber is a substantially a closed volume chamber, protecting the interior of said measurement chamber from the ambient conditions (or atmosphere) exterior to said measurement chamber. To ensure a continuous flow of the selective reactive gas mixture around the measurement point at the surface of the liquid metal sample, however, the substantially closed volume chamber must be made of perforated or porous material, to allow for continuous gas flow to occur past the measurement point without substantially raising the internal gas pressure of the measurement chamber, which would affect the liquid metal surface. In one embodiment, the instrument head is configured and arranged so that said one or more openings for allowing for a continuous flow of said selectively reactive gas mixture are positioned less than 10 mm above the surface of the molten metal or alloy.

A LIBS instrument head, as advantageously used with the present invention, preferably comprises:
- A distal end that faces the surface of the liquid metal during measurement. During measurement the distal end of the instrument head is preferably positioned in the range of 1-10 mm above the surface of the molten metal or alloy sample. In an alternative embodiment, the distal end may be immersed in said molten metal or alloy.
- An open-bottom measurement chamber extending upwardly from the distal end of the instrument head, allowing gas to flow through said chamber, past said sampling point and into space between the distal end of the instrument head and said surface of molten metal or alloy. In an alternative embodiment, wherein the instrument head is at least partially immersed in said molten metal or alloy, the measurement chamber comprises one or more openings, such that gas may flow through said chamber, past said sampling point and out of said one or more openings.
- A laser excitation channel that extends from the pulsed excitation laser to the open-bottom chamber. The laser excitation channel may additionally serve as a gas channel.
- Laser excitation optics arranged in said laser excitation channel, comprising a focusing element for focusing laser light.
- An emission receiving channel that extends from the open-bottom chamber to the laser receiving optics. The emission receiving channel may additionally serve as a gas channel.
- Receiving optics for receiving emission from a plasma created by the excitation laser at the sample surface.
- A means of measuring and maintaining the measurement chamber in a substantially consistent relation to the liquid metal surface during measurement.
- Gas channels for feeding gas(es) or gas mixture(s) to the open-bottom chamber.

In some embodiments, a gas or mixture of gases, such as one or more selectively reactive gas component and/or one or more carrier gas components and/or said selectively reactive gas mixture, are fed from at least one gas source or a gas-mixer through one or more gas channels and/or the laser excitation channel and/or the emission receiving channel into the measurement chamber to maintain the desired environmental conditions, preferably defined by the selectively reactive gas mixture, at and immediately above the surface of the sample inside the measurement chamber, wherein the flow of gas does not perturb the surface of the sample to any significant degree. This causes the surrounding environment to the plasma to be characterized by a constant flow of gas of substantially homogeneous composition, balancing the flow of atoms of the volatile species from the surface of the liquid metal sample. Accordingly, the number, size, and shape of the gas channels, as well as the flow rate of the gas(es) or gas mixture(s) and the distance of the distal end of an open-bottom measurement chamber from the sample surface or alternatively the number, size and shape of the one or more openings is preferably and carefully selected to maintain a steady and continuous flow through the chamber, in particular around the sampling point.

After establishing the desired conditions inside said measurement chamber by providing at least a sufficient flow of the selectively reactive gas mixture to balance the evaporation of a volatile component of the molten metal, LIBS measurements are carried out on said sample surface by emitting one or more laser pulses on the sampling point with sufficient optical energy to ablate a fraction of the sample and create a plasma above the liquid metal surface, followed by receiving emitted light from the generated plasma and transmitting to a detector for recording spectral data for the detected light, the spectral data is then analysed to obtain quantitative determination of one or more elements, preferably using a control unit. As would be recognized by the person skilled in the art, the means of excitation and detection for generating and receiving atomic emission from the molten metal or alloy sample may comprise, but is not limited to, conventional LIBS methods, LIBS with dual collinear or noncollinear pulses, combined LIBS/electrical discharge methods, fibre-coupled laser excitation, or any other LIBS measurement technique or apparatus known in the art. In one embodiment, the method is used to measure the concentration of one or more major components and/or also the concentration of one or more trace elements in said molten metal or alloy. This comprises both non-volatile elements as well as the one or more volatile elements affected by the selectively reactive gas mixture, wherein the measurements yield both precise and substantially temperature independent concentrations.

In one embodiment, the method is used for analysing a variety of metals and metal alloys such as but not limited to aluminium and aluminium alloys, steel and steel alloys, iron and iron alloys, copper, zinc, lead, and other metals and metal alloys in their liquid state and is highly useful in industrial settings and applications wherein the melt comprises at least one volatile element, as mentioned above. The method is not limited to any particular element and can be used in measurements of concentration of major components in alloy samples as well as for trace elements that may be present in metals or alloys. Accordingly, in some embodiments, the method may be used for LIBS measurements of molten metal or alloy that may comprise one or more elements selected from the following group of elements; aluminium, silicon, phosphorous, sulphur, chloride, calcium, magnesium, sodium, lithium, titanium, vanadium, chromium, manganese, iron, cobalt, nickel, copper, zinc, zirconium, niobium, molybdenum, ruthenium, rhodium, palladium, silver, cadmium, tin, antimony, wolfram, rhenium, iridium, platinum, gold, mercury, lead and bismuth.

As mentioned above, the method is advantageously used for measurements of molten metal or alloy samples where high vapor pressure elements are present in the sample. At typical process temperatures for aluminium and aluminium alloy melt these include, but are not limited to, magnesium, sodium, calcium, zinc, strontium, lithium, mercury, and cadmium. In one embodiment, the method is used to measure the concentration of magnesium in said molten metal or alloy. The method may also be advantageously used in conditions where the temperature of the liquid metal cannot be controlled and/or is not precisely known.

### BRIEF DESCRIPTION OF FIGURES

- **Figure 1**: shows an embodiment wherein the selectively reactive gas mixture is transmitted into an open-bottom measurement chamber configured above the surface of molten metal or alloy, said selectively reactive component of said selectively reactive gas mixture reacting with evaporated volatile chemical components from the melt.
- **Figure 2(a)**: shows the accumulation of volatile chemical components in an open-bottom measurement chamber when a substantially inert carrier gas mixture is transmitted to said measurement chamber for a LIBS measurement of molten metal or alloy.
- **Figure 2(b)**: shows how the accumulation of volatile chemical components is reduced in an open-bottom measurement chamber when a selectively reactive gas mixture is transmitted to said measurement chamber for a LIBS measurement of molten metal or alloy.
- **Figure 3**: shows an embodiment, wherein the selectively reactive gas mixture is transmitted into a measurement chamber formed with an immersive tube-like structure comprising perforations to allow for continuous flow of selectively reactive gas mixture through the measurement chamber.
- **Figure 4(a)**: shows an embodiment wherein the selectively reactive gas mixture may be transmitted into a measurement chamber from a pre-mixed source of the selectively reactive gas mixture.
- **Figure 4(b)**: shows an embodiment wherein the selectively reactive gas mixture is mixed from a first gas source comprising a substantially inert carrier gas or gas mixture and from a second gas source comprising at least one selectively reactive gas component, prior to said selectively reactive gas mixture being transmitted into a measurement chamber.
- **Figure 5**: shows the temperature dependence of a LIBS signal originating from a volatile component (magnesium) in molten alloy (host metal being aluminum) when using (i) only a substantially inert carrier gas (argon) and (ii) a selectively reactive gas mixture (a mixture of argon and carbon dioxide).
- **Figure 6**: shows the measured LIBS signal of magnesium in molten alloy for a number of consecutive sequences of laser pulses impinging on the surface of the molten alloy for (i) argon gas and (ii) a mixture of argon and carbon dioxide.
- **Figure 7**: shows the measured LIBS signal of magnesium in two molten metal or alloy samples, namely aluminum melt comprising 1% and 4% Mg, as a function of the fraction of the selectively reactive gas component in the selectively reactive gas mixture, consisting of argon and carbon dioxide.

### DETAILED DESCRIPTION

In the following, exemplary embodiments of the invention will be described. These embodiments are provided to provide further understanding of the invention, without limiting its scope.

In the following description, a series of steps are described. The skilled person will appreciate that unless required by the context, the order of steps is not critical for the resulting configuration and its effect. Further, it will be apparent to the skilled person that irrespective of the order of steps, the presence or absence of time delay between steps, can be present between some or all of the described steps.

As used herein, including in the claims, singular forms of terms are to be construed as also including the plural form and vice versa, unless the context indicates otherwise. Thus, it should be noted that as used herein, the singular forms "a," "an," and "the" include plural references unless the context clearly dictates otherwise.

Throughout the description and claims, the terms "comprise", "including", "having", and "contain" and their variations should be understood as meaning "including but not limited to", and are not intended to exclude other components.

The present invention also covers the exact terms, features, values, and ranges etc. are used in conjunction with terms such as about, around, generally, substantially, essentially, at least etc. (i.e., "about 3" shall also cover exactly 3 or "substantially constant" shall also cover exactly constant).

The term "at least one" should be understood as meaning "one or more", and therefore includes both embodiments that include one or multiple components. Furthermore, dependent claims that refer to independent claims that describe features with "at least one" have the same meaning, both when the feature is referred to as "the" and "the at least one".

It will be appreciated that variations to the foregoing embodiments of the invention can be made while still falling within the scope of the invention. Features disclosed in the specification, unless stated otherwise, can be replaced by alternative features serving the same, equivalent or similar purpose. Thus, unless stated otherwise, each feature disclosed represents one example of a generic series of equivalent or similar features. The claimed invention is only limited by the appended claims.

Use of exemplary language, such as "for instance", "such as", "for example" and the like, is merely intended to better illustrate the invention and does not indicate a limitation on the scope of the invention unless so claimed. Any steps described in the specification may be performed in any order or simultaneously unless the context clearly indicates otherwise.

All of the features and/or steps disclosed in the specification can be combined in any combination, except for combinations where at least some of the features and/or steps are mutually exclusive. Preferred features of the invention are applicable to all aspects of the invention and may be used in any combination.

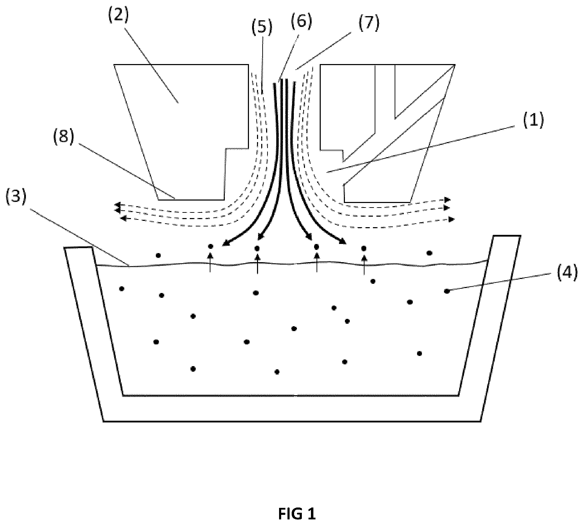

Figure 1 illustrates schematically how an open-bottom measurement chamber (1) for performing LIBS analysis according to the present invention is formed when a LIBS instrument head (2) is configured in vicinity of a liquid metal or alloy surface (3), said liquid metal or alloy (3) containing a volatile chemical component (4) that exhibits a continuous flux of atoms away from the surface and is present in a significant amount in the vapor phase above the molten metal or alloy surface. A selectively reactive gas mixture (5) comprising at least one substantially inert carrier gas component and at least one selectively reactive gas component (6) is transmitted into the open-bottom chamber through the laser excitation channel (7), said selectively reactive gas mixture flows through the open-bottom chamber (1) to the liquid metal or alloy surface (3) and out of the open-bottom chamber (1) through the opening between the distal end (8) of the instrument head (2) and the sample surface (3), providing preferably a continuous flow of gas through the measurement chamber (1). The selectively reactive gas component (6), of the selectively reactive gas mixture (5), reacts with the evaporating chemical component (4). This is advantageously done prior to and during a LIBS measurement for determining quantitatively the chemical composition of the liquid metal. Note that, the separation of the at least one selectively reactive gas component (6) within the selectively reactive gas mixture (5) is for clarity and illustration purposes only. In practice, the selectively reactive gas mixture (5) comprising at least one selectively reactive gas component (6) is preferably substantially mixed as it enters the open-bottom measurement chamber (1).

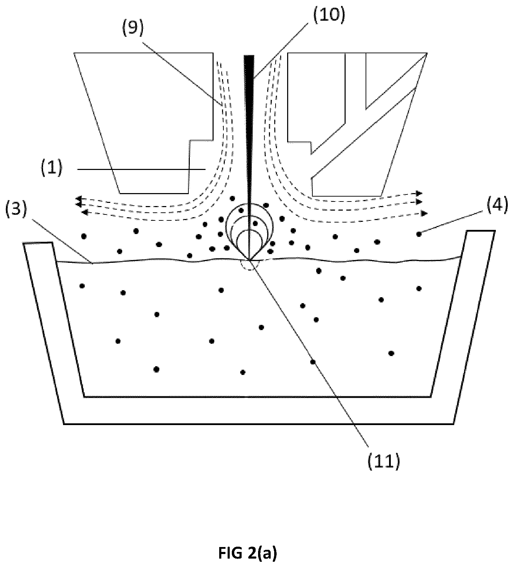

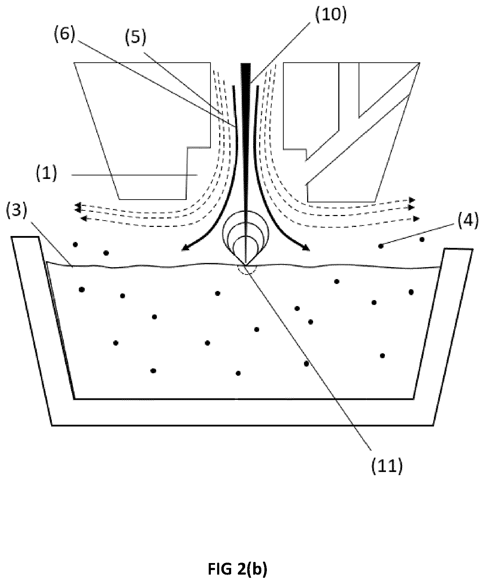

**Figure 2** compares the situations where pure inert carrier gas or gas mixture (9) and a selectively reactive gas mixture (5), respectively, are passed through the open-bottom measurement chamber (1) towards a liquid metal or alloy surface (3) during a LIBS measurement, where a focused pulsed laser beam (10) is directed at the surface of the liquid metal or alloy (3). **Figure 2a** illustrates how the volatile component (4) of the liquid metal or alloy accumulates in the open-bottom chamber due to direct and laser-induced evaporation. A measured LIBS signal will contain a contribution from the volatile species (4) dissolved in the melt as well as a contribution from the vapor phase of the same species, including evaporated material ablated by previous laser pulses (10). The vapor phase furthermore contributes to self-absorption of the emitted light from the volatile species. **Figure 2b** shows how the selectively reactive gas component (6) of the selectively reactive gas mixture (5) ensures that the volatile component (4) is not present in a significant quantity within the open-bottom chamber (1) as an atomic species in the gas phase, at least around the sampling point (11), furthermore ensuring that the volatile component does not accumulate during the measurement by the action of the impinging laser pulses. In this case, the measured LIBS signal will primarily contain a contribution from the liquid metal and additional self-absorption by the surrounding vapor phase is substantially eliminated.

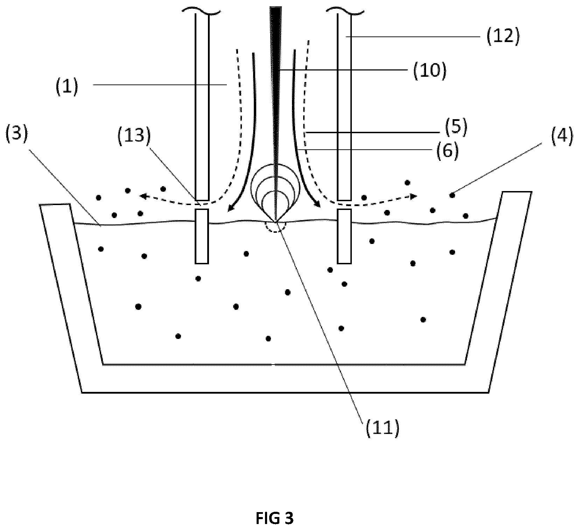

**Figure 3** illustrates schematically how a gas mixture (5) comprising a selectively reactive gas component (6) can be passed to the surface of the liquid metal inside a tube (12) or the-like, immersed in the liquid metal or alloy (3), provided that the tube is fashioned with perforations (13) or other means for allowing the gas mixture (5) to continuously pass the liquid metal surface for reacting with a volatile chemical component (4) of the liquid metal or alloy prior to the gas mixture exiting the tube (12).

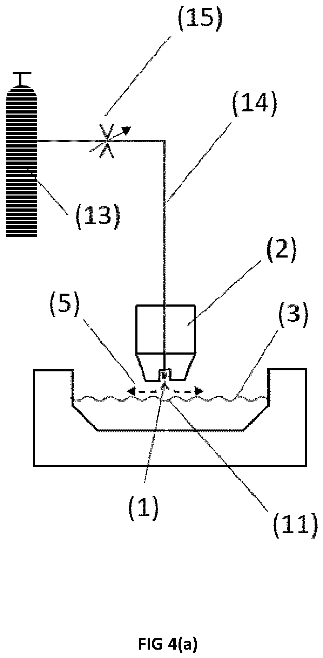

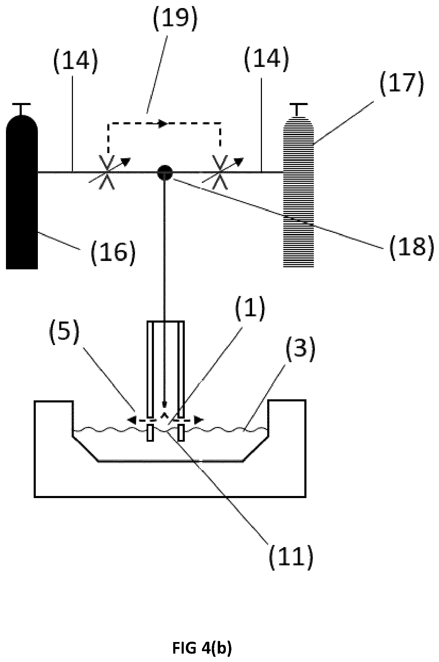

**Figure 4** illustrates in a schematic manner how the selectively reactive gas mixture may be prepared with the desired composition prior to being fed into a measurement chamber, wherein the measurement chamber (1) is preferably an open-bottom measurement chamber or a substantially closed volume measurement chamber as is illustrated in **Figures 4a** and **4b** respectively. In **Figure 4a****,** the selectively reactive gas mixture is supplied from a single pre-mixed source of gas (13), containing the substantially inert carrier gas(es) and the selectively reactive gas component(s). The selectively reactive gas mixture is transmitted into the open-bottom measurement chamber (1) through a gas-channel (14) connected to the instrument head (2). It may be connected to and transmitted through said laser excitation path/channel (not shown) and/or emission receiving channel (not shown) and/or at least one separate gas-channel configured in the instrument head (2). The gas flow is advantageously regulated by a gas flow controller (15), providing a steady continuous flow of the selectively reactive gas mixture (5) past the measurement point (11). In **Figure 4b****,** the selectively reactive gas mixture (5) is mixed from two different gas sources, wherein a gas source is a compartment holding a substantially pure gas or a prepared mixture of gases. A first gas source (16) holds a substantially inert background gas A, such as, but not limited to Ar, He, Ne, or mixtures thereof, and a second gas source (17) holds a selectively reactive gas B, such as, but not limited to CO₂. The two gases, A and B, are fed through two separate feed lines (14) from the gas source compartments (16) and (17) to a gas-mixer (18), wherein the gas-mixer will prepare the selectively reactive gas mixture with the desired composition such as, but not limited, to 5% gas B and 95% gas A. The mixing is advantageously controlled as to provide a constant flow of gases A and B or a measurement of flow A to provide a proportional flow of gas B through a linkage (19) between a flow meter and a flow controller. By extension, in some embodiments, the gas mixture can also be prepared from three or more gas sources. The gas preparation may be used in conjunction with any kind of suitable LIBS measurement apparatus, for example consisting of an open-bottom chamber **(****Figure 4a****)** or an immersive perforated tube **(****Figure 4b****),** as described in the preferred embodiments of the invention, so that the local environment of the LIBS sampling point is governed by the selectively reactive gas mixture.

### EXAMPLES

### Example I

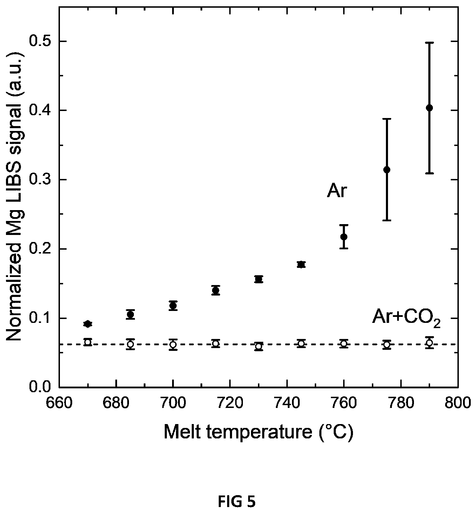

The temperature dependence of a LIBS signal from a volatile component (magnesium) in a liquid alloy (1 wt% Mg), normalized relative to the LIBS signal of the base metal (aluminium), was studied using inert gas on one hand and a selectively reactive gas mixture on the other, and the results are shown in **Figure 5****.** In the case of a pure argon environment, the Mg signal increases exponentially with melt temperature, which can be accounted for by an increasing presence of Mg in the vapor phase. Also apparent is a strong increase in measurement uncertainty at higher melt temperatures. It is obvious that in a substantially inert environment, an exact knowledge of melt temperature is required for quantification of the volatile component when performing LIBS analysis. Temperature correction only partly solves the problem, however, since the amount of material in the vapor phase also depends on the presence of other elements in the melt, as well as surface reactions, making accurate quantification unfeasible. If, however, the substantially inert carrier gas contains a selectively reactive gas component, in this case carbon dioxide, the temperature dependence of the magnesium signal is substantially eliminated and there is no significant increase in measurement uncertainty over the range of melt temperatures shown in the figure (690-790°C). For quantification, therefore, an exact knowledge of melt temperature is no longer required, and the absence of the vapor phase contribution means that the intensity of the measured LIBS signal is no longer substantially affected by other elements in the melt or surface effects.

### Example II.

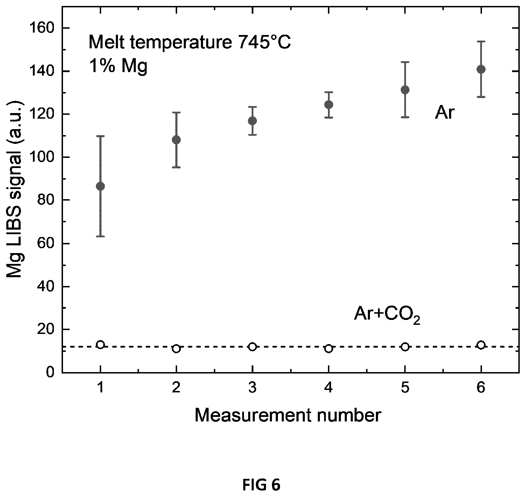

The measured LIBS signal of a volatile component (magnesium) in molten metal or alloy (aluminium alloy containing approximately 1% magnesium by weight) is recorded for six successive series of 300 laser pulses each, impinging on the surface of said molten metal or alloy, where, on one hand, inert gas (argon) is flowing through an open-bottom chamber and, on the other hand, a selectively reactive gas mixture comprising inert gas (argon) and a selectively reactive gas component (carbon dioxide). The results of the experiments are shown in Figure 6. During the measurements, the open bottom-chamber stays in a fixed relation to the molten metal surface. In the case of purely inert gas, the measured signal is high, shows a large variance between measurements and increases with successive measurements. When the gas contains the selectively reactive component, the measured LIBS signal shows small variability between measurements (error bars are smaller than the symbols in the figure) and does not change with successive measurements. Obtaining increased precision in quantification by increasing the number of successive measurements is therefore only achievable in the presence of the selective reactive gas component.

### Example III.

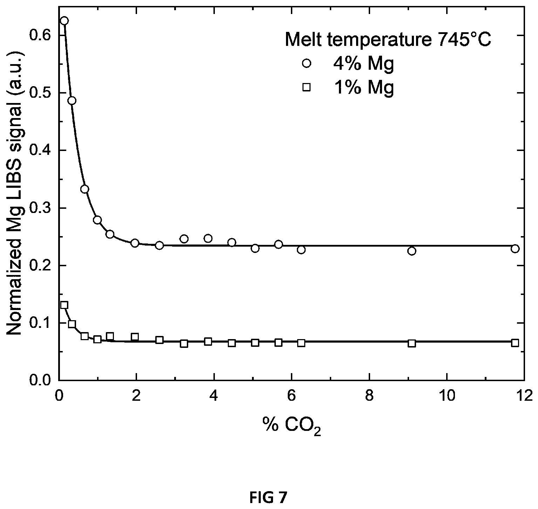

The measured LIBS signal of a volatile component (in this case magnesium) in two molten metal or alloy samples (i.e., aluminium alloy comprising approximately 1% Mg and 4% Mg, respectively) was studied as a function of the fraction of the selectively reactive gas component (in this case carbon dioxide) in the selectively reactive gas mixture. The results are summarized in Figure 7. It is evident that by increasing the concentration of the selectively reactive gas component (in this case carbon dioxide) in the substantially inert carrier gas (in this case argon) results in a rapidly decreasing LIBS signal from the volatile component (in this case magnesium) present in the molten metal. This is consistent with the gas-phase reaction gradually eliminating the vapor-phase contribution of the volatile component to the LIBS signal. It is clear that a small amount of the selectively reactive gas component (<2%), if not precisely controlled, will yield an unstable LIBS signal from the volatile component. The minimum amount of selectively reactive gas component required according to the present invention will, in general, depend on the concentration of the volatile component and the melt temperature. As shown in the figure, a larger amount of selectively reactive gas component is required to compensate for evaporation from a higher concentration of the volatile component in the molten metal. For the concentrations and melt temperature shown in the figure, the signal stabilizes fully at a concentration of about 4-6% CO₂, depending on the Mg concentration.

## Claims

1. A method for quantitative analysis of one or more elements in a molten metal or alloy by LIBS, wherein negative effects of the vapor phase of volatile trace or alloying elements in the molten metal or alloy on the analysis of said volatile elements are substantially eliminated, said method comprising:
a. arranging a measurement chamber facing the surface of said molten metal or alloy, wherein said measurement chamber comprises one or more openings or one or more windows to provide a path for a focused laser beam from a LIBS excitation laser to enter said chamber and reach a sampling point on said surface and for providing a path for emitted light from generated plasma to exit said chamber and be collected and transmitted to a detector,
b. transmitting a continuous flow of a selectively reactive gas mixture to the sampling point within said measurement chamber, wherein said selectively reactive gas mixture comprises one or more substantially inert carrier gas components and one or more selectively reactive gas components, wherein said one or more selectively reactive gas component of the selectively reactive gas mixture has the property of preferentially reacting with one or more volatile elements present in the molten metal or alloy,
c. carrying out LIBS measurement on the surface of said molten metal or alloy by emitting one or more laser pulses on said sampling point with sufficient optical energy to ablate a fraction of the sample and generate a plasma above the sampling point,
d. receiving emitted light from the generated plasma and transmitting to a detector for recording spectral data for the detected light, and
e. analysing the spectral data to obtain quantitative determination of said one or more elements in said molten metal or alloy.

2. The method according to claim 1, wherein the selectively reactive gas mixture is mixed prior to being transmitted into said measurement chamber and transmitted to said measurement chamber through one or more gas channels.

3. The method according to claim 1, wherein the selectively reactive gas mixture is mixed inside said measurement chamber, wherein said one or more selectively reactive gas components are transmitted to said measurement chamber through one or more first gas channel and said one or more carrier gas components are transmitted to said measurement chamber through one or more second gas channel.

4. The method according to either claim 2 or 3, wherein the method further comprises a step of controlling the flow of said one or more carrier gas components and said one or more selectively reactive gas components for providing a suitable proportion of said components prior to mixing said selectively reactive gas mixture.

5. The method according to claim 1, wherein the total flow rate of the selectively reactive gas mixture is in the range 1-5 L/min.

6. The method according to any of the preceding claims, wherein the one or more carrier gas components is selected from the group of noble gases.

7. The method according to the preceding claim, wherein the one or more carrier gas components comprises argon.

8. The method according to any of the preceding claims, wherein the one or more selectively reactive gas component is carbon dioxide.

9. The method according to any of the preceding claims, wherein the fraction of the one or more selectively reactive gas components in the selectively reactive gas mixture is in the range from 1% to 20%, more preferably in the range 2% to 10%, even more preferably in the range 4% to 8% relative to the total volume of the selectively reactive gas mixture.

10. The method according to any of the preceding claims, where the measurement chamber allows for continuous flow of said selectively reactive gas mixture at and in the immediate vicinity to the sampling point and generated plasma.

11. The method according to claim 10, wherein the measurement chamber is formed by configuring a non-immersive LIBS instrument head above the surface of said molten metal or alloy.

12. The method according to claim 10, wherein the measurement chamber is formed by immersing a LIBS instrument head, or parts thereof, in the molten metal or alloy, wherein said measurement chamber comprises one or more openings such that said openings are positioned above the surface of the molten metal or alloy to allow for a continuous flow of said selectively reactive gas mixture at and in the immediate vicinity to the sampling point and generated plasma.

13. The method according to the preceding claim, wherein said one or more openings for allowing for a continuous flow of said selectively reactive gas mixture are positioned less than 10 mm above the surface of the molten metal or alloy.

14. The method according to any of the preceding claims, wherein the method is used to measure the concentration of one or more major components and/or also the concentration of one or more trace elements in said molten metal or alloy.

15. The method according to the preceding claim, wherein the method is used to measure the concentration of magnesium in said molten metal or alloy.

## Patentansprüche

1. Verfahren zur quantitativen Analyse eines oder mehrerer Elemente in einem/einer geschmolzenen Metall oder Legierung durch LIBS, wobei ungünstige Auswirkungen der Dampfphase von flüchtigen Spuren oder Legierungselementen in dem/der geschmolzenen Metall oder Legierung auf die Analyse der flüchtigen Elemente im Wesentlichen beseitigt werden, wobei das Verfahren umfasst:
a. Anordnen einer Messkammer, die der Oberfläche des/der geschmolzenen Metalls oder Legierung zugewandt ist, wobei die Messkammer eine oder mehrere Öffnungen oder ein oder mehrere Fenster umfasst, um einen Weg für einen fokussierten Laserstrahl von einem LIBS-Anregungslaser, um in die Kammer einzutreten und einen Probenahmepunkt auf der Oberfläche zu erreichen, bereitzustellen und um einen Weg für emittiertes Licht von erzeugtem Plasma, um die Kammer zu verlassen und gesammelt und zu einem Detektor geführt zu werden, bereitzustellen,
b. Überführen eines kontinuierlichen Flusses eines selektiv reaktiven Gasgemischs zu dem Probenahmepunkt in der Messkammer, wobei das selektiv reaktive Gasgemisch eine oder mehrere im Wesentlichen inerte Trägergaskomponenten und eine oder mehrere selektiv reaktive Gaskomponenten umfasst, wobei die eine oder mehreren selektiv reaktiven Gaskomponenten des selektiv reaktiven Gasgemischs die Eigenschaft haben, bevorzugt mit einem oder mehreren flüchtigen Elementen zu reagieren, die in dem/der geschmolzenen Metall oder Legierung vorhanden sind,
c. Durchführen einer LIBS-Messung an der Oberfläche des/der geschmolzenen Metalls oder Legierung durch Emittieren eines oder mehrerer Laserpulse auf den Probenahmepunkt mit ausreichender optischer Energie, um einen Teil der Probe abzutragen und ein Plasma über dem Probenahmepunkt zu erzeugen,
d. Empfangen von emittiertem Licht von dem erzeugten Plasma und Senden an einen Detektor zum Aufzeichnen von Spektraldaten für das erfasste Licht, und
e. Analysieren der Spektraldaten, um eine quantitative Bestimmung des einen oder der mehreren Elemente in dem/der geschmolzenen Metall oder Legierung zu erhalten.

2. Verfahren nach Anspruch 1, wobei das selektiv reaktive Gasgemisch gemischt wird, bevor es in die Messkammer überführt und durch einen oder mehrere Gaskanäle zu der Messkammer überführt wird.

3. Verfahren nach Anspruch 1, wobei das selektiv reaktive Gasgemisch in der Messkammer gemischt wird, wobei die eine oder mehreren selektiv reaktiven Gaskomponenten durch einen oder mehrere erste Gaskanäle zu der Messkammer überführt werden und die eine oder mehreren Trägergaskomponenten durch einen oder mehrere zweite Gaskanäle zu der Messkammer überführt werden.

4. Verfahren nach Anspruch 2 oder 3, wobei das Verfahren ferner einen Schritt des Steuerns des Flusses der einen oder mehreren Trägergaskomponenten und der einen oder mehreren selektiv reaktiven Gaskomponenten umfasst, um einen geeigneten Anteil der Komponenten vor Mischen des selektiv reaktiven Gasgemischs bereitzustellen.

5. Verfahren nach Anspruch 1, wobei die Gesamtströmungsrate des selektiv reaktiven Gasgemischs in dem Bereich von 1-5 l/min liegt.

6. Verfahren nach einem der vorstehenden Ansprüche, wobei die eine oder mehreren Trägergaskomponenten aus der Gruppe von Edelgasen ausgewählt sind.

7. Verfahren nach dem vorstehenden Anspruch, wobei die eine oder mehreren Trägergaskomponenten Argon umfassen.

8. Verfahren nach einem der vorstehenden Ansprüche, wobei es sich bei der einen oder den mehreren selektiv reaktiven Gaskomponenten um Kohlendioxid handelt.

9. Verfahren nach einem der vorstehenden Ansprüche, wobei der Anteil der einen oder mehreren selektiv reaktiven Gaskomponenten in dem selektiv reaktiven Gasgemisch in dem Bereich von 1 % bis 20 %, bevorzugter in dem Bereich von 2 % bis 10 %, noch bevorzugter in dem Bereich von 4 % bis 8 %, bezogen auf das Gesamtvolumen des selektiv reaktiven Gasgemischs, liegt.

10. Verfahren nach einem der vorstehenden Ansprüche, wobei die Messkammer kontinuierlichen Fluss des selektiv reaktiven Gasgemischs an und in der unmittelbaren Nähe zu dem Probenahmepunkt und dem erzeugten Plasma erlaubt.

11. Verfahren nach Anspruch 10, wobei die Messkammer durch Konfigurieren eines nicht-immersiven LIBS-Instrumentenkopfs über der Oberfläche des/der geschmolzenen Metalls oder Legierung gebildet wird.

12. Verfahren nach Anspruch 10, wobei die Messkammer durch Eintauchen eines LIBS-Instrumentenkopfs oder von Teilen davon in das/die geschmolzene Metall oder Legierung gebildet wird, wobei die Messkammer eine oder mehrere Öffnungen umfasst, wobei die Öffnungen über der Oberfläche des/der geschmolzenen Metalls oder Legierung angeordnet sind, um einen kontinuierlichen Fluss des selektiv reaktiven Gasgemischs an und in der unmittelbaren Nähe des Probenentnahmepunkts und des erzeugten Plasmas zu erlauben.

13. Verfahren nach dem vorstehenden Anspruch, wobei die eine oder mehreren Öffnungen zum Erlauben eines kontinuierlichen Flusses des selektiv reaktiven Gasgemischs weniger als 10 mm über der Oberfläche des/der geschmolzenen Metalls oder Legierung angeordnet sind.

14. Verfahren nach einem der vorstehenden Ansprüche, wobei das Verfahren verwendet wird, um die Konzentration einer oder mehrerer Hauptkomponenten und/oder die Konzentration eines oder mehrerer Spurenelemente in dem/der geschmolzenen Metall oder Legierung zu messen.

15. Verfahren nach dem vorstehenden Anspruch, wobei das Verfahren verwendet wird, um die Konzentration von Magnesium in dem/der geschmolzenen Metall oder Legierung zu messen.

## Revendications

1. Procédé d'analyse quantitative d'un ou plusieurs éléments dans un métal ou alliage fondu par LIBS, dans lequel les effets négatifs de la phase vapeur d'éléments traces ou d'alliage volatils dans le métal ou alliage fondu sur l'analyse desdits éléments volatils sont en grande partie éliminés, ledit procédé comprenant :
a. le positionnement d'une chambre de mesure en face de la surface dudit métal ou alliage fondu, ladite chambre de mesure comprenant une ou plusieurs ouvertures ou une ou plusieurs fenêtres pour fournir un trajet permettant à un faisceau laser focalisé provenant d'un laser d'excitation LIBS d'entrer dans ladite chambre et d'atteindre un point d'échantillonnage sur ladite surface et pour fournir un trajet permettant à la lumière émise par le plasma généré de sortir de ladite chambre et d'être collectée et transmise à un détecteur,
b. l'acheminement d'un écoulement continu d'un mélange gazeux sélectivement réactif jusqu'au point d'échantillonnage à l'intérieur de ladite chambre de mesure, ledit mélange gazeux sélectivement réactif comprenant un ou plusieurs composants gazeux porteurs sensiblement inertes et un ou plusieurs composants gazeux sélectivement réactifs, ledit ou lesdits composants gazeux sélectivement réactifs du mélange gazeux sélectivement réactif ayant la propriété de réagir préférentiellement avec un ou plusieurs éléments volatils présents dans le métal ou alliage fondu,
c. la réalisation d'une mesure LIBS sur la surface dudit métal ou alliage fondu par émission d'une ou plusieurs impulsions laser sur ledit point d'échantillonnage avec une énergie optique suffisante pour réaliser l'ablation d'une fraction de l'échantillon et générer un plasma au-dessus du point d'échantillonnage,
d. la réception de la lumière émise par le plasma généré et sa transmission à un détecteur en vue d'enregistrer des données spectrales pour la lumière détectée, et
e. l'analyse des données spectrales pour obtenir une détermination quantitative dudit ou desdits éléments dans ledit métal ou alliage fondu.

2. Procédé selon la revendication 1, dans lequel le mélange gazeux sélectivement réactif est mélangé avant d'être acheminé à l'intérieur de ladite chambre de mesure et acheminé jusqu'à ladite chambre de mesure par un ou plusieurs canaux de gaz.

3. Procédé selon la revendication 1, dans lequel le mélange gazeux sélectivement réactif est mélangé à l'intérieur de ladite chambre de mesure, ledit ou lesdits composants gazeux sélectivement réactifs étant acheminés jusqu'à ladite chambre de mesure par un ou plusieurs premiers canaux de gaz et ledit ou lesdits composants gazeux porteurs étant acheminés jusqu'à ladite chambre de mesure par un ou plusieurs deuxièmes canaux de gaz.

4. Procédé selon la revendication 2 ou 3, le procédé comprenant en outre une étape de régulation de l'écoulement dudit ou desdits composants gazeux porteurs et dudit ou desdits composants gazeux sélectivement réactifs en vue de fournir une proportion appropriée desdits composants avant le mélange dudit mélange gazeux sélectivement réactif.

5. Procédé selon la revendication 1, dans lequel le débit total du mélange gazeux sélectivement réactif est compris entre 1 et 5 L/min.

6. Procédé selon l'une quelconque des revendications précédentes, dans lequel le ou les composants gazeux porteurs sont choisis dans le groupe des gaz rares.

7. Procédé selon la revendication précédente, dans lequel le ou les composants gazeux porteurs comprennent de l'argon.

8. Procédé selon l'une quelconque des revendications précédentes, dans lequel le ou les composants gazeux sélectivement réactifs sont du dioxyde de carbone.

9. Procédé selon l'une quelconque des revendications précédentes, dans lequel la fraction du ou des composants gazeux sélectivement réactifs dans le mélange gazeux sélectivement réactif est comprise entre 1 % et 20 %, mieux comprise entre 2 % et 10 %, mieux encore comprise entre 4 % et 8 %, rapporté au volume total du mélange gazeux sélectivement réactif.

10. Procédé selon l'une quelconque des revendications précédentes, dans lequel la chambre de mesure permet un écoulement continu dudit mélange gazeux sélectivement réactif au niveau et au voisinage immédiat du point d'échantillonnage et du plasma généré.

11. Procédé selon la revendication 10, dans lequel la chambre de mesure est formée par configuration d'une tête d'instrument LIBS non immersive au-dessus de la surface dudit métal ou alliage fondu.

12. Procédé selon la revendication 10, dans lequel la chambre de mesure est formée par immersion d'une tête d'instrument LIBS ou de parties de celle-ci dans le métal ou alliage fondu, ladite chambre de mesure comprenant une ou plusieurs ouvertures telles que lesdites ouvertures sont positionnées au-dessus de la surface du métal ou alliage fondu pour permettre un écoulement continu dudit mélange gazeux sélectivement réactif au niveau et au voisinage immédiat du point d'échantillonnage et du plasma généré.

13. Procédé selon la revendication précédente, dans lequel ladite ou lesdites ouvertures destinées à permettre un écoulement continu dudit mélange gazeux sélectivement réactif sont positionnées à moins de 10 mm au-dessus de la surface du métal ou alliage fondu.

14. Procédé selon l'une quelconque des revendications précédentes, le procédé étant utilisé pour mesurer la concentration d'un ou plusieurs composants principaux et/ou également la concentration d'un ou plusieurs éléments traces dans ledit métal ou alliage fondu.

15. Procédé selon la revendication précédente, le procédé étant utilisé pour mesurer la concentration de magnésium dans ledit métal ou alliage fondu.
